# EUROPEAN PATENT APPLICATION

(11) **EP 3 376 651 A1**
(43) Date of publication of application: **19.09.2018**
(21) Application number: 16863764.3
(22) Date of filing: 09.11.2016
(51) Int. Cl.: H02K 35/02, H02K 7/18

(54) **LINEAR ELECTRIC GENERATOR**

(30) Priority: 13.11.2015 RU 2015148952
(71) Applicant: Kumi, Viacheslav Vladimirovich, Samarskaya obl., Ust-Kinelskij 446442 (RU); Rossov, Boris Leonidovich, Saratov 410064 (RU)
(72) Inventor: ROSSOV, Boris Leonidovich, Saratov 410064 (RU)
(74) Representative: Lapienis, Juozas
(86) International application number: PCT/IB2016/056741
(87) International publication number: WO 2017/081621

(57) **Abstract**

The invention relates to devices for converting mechanical energy produced by a vibrational movement into electrical current using permanent magnets and coils. The technical effect is an increase in the efficiency with which mechanical energy produced by a vibrational movement is converted into electrical current. The technical solution comprises: a cylindrical housing; two cylindrically shaped magnetic cores with axially oriented magnetization, which are disposed inside the cylindrical housing with like poles facing each other; two cylindrical coils with axial windings, which are disposed on the cylindrical housing above the respective magnetic cores; and is provided with a cylindrical coil with a radial winding, which is disposed on the cylindrical housing between the cylindrical coils with axial windings.

## Description

### Technical field

The invention relates to devices for converting mechanical energy produced by a vibrational movement into electrical current using permanent magnets and coils.

### Background of the Invention

The analogous solutions are known, comprising a cylindrical housing, two cylindrically shaped magnetic cores with axially oriented magnetization, which are disposed inside the cylindrical housing with like poles facing each other, two cylindrical coils with axial windings, which are disposed on the cylindrical housing above the respective magnetic cores (e.g., see a utility model description of the patent RU 83373, IPC H02K35/02 (2006/01), pub. 27.01.2011; a utility model description of the patent RU 101881, IPC H02K35/02 (2006/01), pub. 27.01.2011).

The disadvantage of the analogues is the complexity of the design, the insufficient efficiency of conversion of mechanical energy produced by a vibrational movement into electrical current.

The closest analogue is a linear electric generator comprising a cylindrical housing, two cylindrically shaped magnetic cores with axially oriented magnetization, which are disposed inside the cylindrical housing with like poles facing each other, two cylindrical coils with axial windings, which are disposed on the cylindrical housing above the respective magnetic cores (e.g., see a utility model description of the patent RU 101881, IPC H02K35/02 (2006/01), pub. 27.01.2011).

The disadvantage of the closest analogue is the insufficient efficiency of conversion of mechanical energy produced by a vibrational movement into electrical current.

### Technical problem

The technical effect is an increase in the efficiency with which mechanical energy produced by a vibrational movement is converted into electrical current.

### The solution of the problem

The essence of the technical solution is that it comprises: a cylindrical housing; two cylindrically shaped magnetic cores with axially oriented magnetization, which are disposed inside the cylindrical housing with like poles facing each other; two cylindrical coils with axial windings, which are disposed on the cylindrical housing above the respective magnetic cores; and unlike the closest analogue it is provided with a cylindrical coil with a radial winding, which is disposed on the cylindrical housing between the cylindrical coils with axial windings.

### Brief Description of the Drawings

The essence of the technical solution is explained with a drawing showing a longitudinal section side view.

### Fig.1

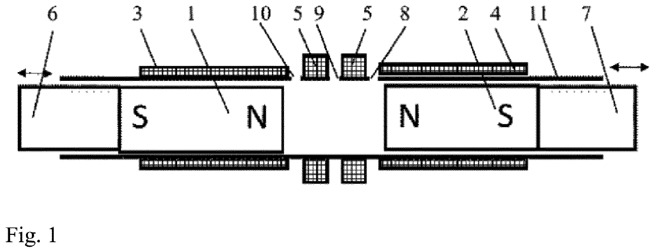

A linear electric generator, comprising: a cylindrical housing 11; a first cylindrically shaped magnetic core 1 with axially oriented magnetization, which is disposed inside the cylindrical housing 11, a second cylindrically shaped magnetic core 2 with axially oriented magnetization, which is disposed inside the cylindrical housing 11 facing the first core 1 with its like pole; two cylindrical coils with axial windings 3, 4, which are disposed on the cylindrical housing 11 above the respective magnetic cores 1 and 2; and is provided with a cylindrical coil 5 with a radial winding, which is disposed on the cylindrical housing 11 between the cylindrical coils with axial windings 3, 4. The first magnetic core 1 and the second magnetic core 2 each is attached to its own drive fastening segment 6 and 7, correspondingly. The drive fastening segments 6 and 7 are attached to a drive mechanism (not shown in the drawing for clarity), which together with the drive fastening segments 6 and 7 provides synchronous counter-return motion of the magnetic cores 1 and 2, wherein the magnetic cores 1 and 2 alternately move now towards each other now apart. The amplitude of the counter-return motion of the magnetic cores 1 and 2 is equal to the length of each magnetic core 1 and 2.

### Description of the Embodiments

The cylindrical coil 5 with a radial winding may be provided as a rectangular winding, rolled to form a cylindrical shape on the outer surface of the cylindrical housing 11. The cylindrical coil 5 with a radial winding may be provided as separate parts connected to each other in series or in parallel.

The cylindrical coil 5 with a radial winding and cylindrical coils with axial windings 3 and 4, for example, may be connected in parallel.

The cylindrical housing 11 is made of a dielectric material.

The relative dimensions of the above elements of the linear electric generator may be performed in the following ratios (or approximate to them):
- the length of the first magnetic core 1 and the length of the second magnetic core 2 each equals to their double diameter;
- the length of each cylindrical coil 3, 4 with axial windings equals the length of the respective magnetic cores 1 and 2;
- the length of the cylindrical coil 5 with a radial winding equals to the diameter of the magnetic cores 1 and 2.

### Industrial Applicability

The operation principle of the suggested device consists in the direct interaction of the magnetic field of the movable first magnetic core 1 and the movable second magnetic core 2 with the magnetic fields of the currents induced by them in the cylindrical coil 5, i.e. based on the magnetic-flux density (magnetic field intensity) variation per time unit within a constant capacity enclosed in the generating circuit.

When the first magnetic core 1 and the second magnetic core 2 are moving towards each other inside the cylindrical housing 11 in the space between the like poles of the first magnetic core 1 and the second magnetic core 2 enclosed with the cylindrical coil 5 with a radial winding, the field intensity increases both due to the counter motion of the first magnetic core 1 and the second magnetic core 2, and to the inductive response of the radial winding of the cylindrical coil 5, in which the induced current forms a magnetic flux preventing the movements of the first magnetic core 1 and the second magnetic core 2. As a result, the magnetic flux progressively increases in the workspace. Accordingly, the current in the cylindrical coil 5 increases to its maximum with a minimum gap between the poles of the first magnetic core 1 and the second magnetic core 2.

The maximum value of the current corresponds to the minimum distance between the like poles of the first magnetic core 1 and the second magnetic core 2 brought maximally close, yet not beyond the coils with an axial winding.

The maximum value of the opposite direction current corresponds to the maximum distance between the like poles of the first magnetic core 1 and the second magnetic core 2, yet not beyond the coil 5 with a radial winding.

The e.m.f is induced in the cylindrical coils 3 and 4 with axial windings due to the movement of the first magnetic core 1 and the second magnetic core 2, similarly with the prior art devices including the closest analogue.

The gap between the inner surface of the cylindrical housing 11, the surface of the first magnetic core 1 and the second magnetic core 2 is minimal, yet it does not prevent from the free reciprocating motion of the first magnetic core 1 and the second magnetic core 2. The cylindrical housing 11 has openings 8, 9, 10, providing free air circulation, without interfering with the axial movements of the first magnetic core 1 and providing heat exchange within the workspace of the linear electric generator.

## Claims

1. A linear electric generator, comprising: a cylindrical housing; two cylindrically shaped magnetic cores with axially oriented magnetization, which are disposed inside the cylindrical housing with like poles facing each other; two cylindrical coils with axial windings, which are disposed on the cylindrical housing above the respective magnetic cores, **characterized in that** it is provided with a cylindrical coil with a radial winding, which is disposed on the cylindrical housing between the cylindrical coils with axial windings.
